**Europäisches Patentamt**

**European Patent Office**

**Office européen des brevets**

(19)

(11) Veröffentlichungsnummer : **0 461 288 B1**

(12)

# EUROPÄISCHE PATENTSCHRIFT

(45) Veröffentlichungstag der Patentschrift :
**22.02.95 Patentblatt 95/08**

(51) Int. Cl.$^6$ : **G05D 3/18**

(21) Anmeldenummer : **90111221.9**

(22) Anmeldetag : **13.06.90**

(54) Schaltungsanordnung zum Regeln der Lage eines ventilgesteuerten hydraulischen Stellglieds.

(43) Veröffentlichungstag der Anmeldung :
**18.12.91 Patentblatt 91/51**

(45) Bekanntmachung des Hinweises auf die
Patenterteilung :
**22.02.95 Patentblatt 95/08**

(84) Benannte Vertragsstaaten :
**DE FR GB IT**

(56) Entgegenhaltungen :
**FR-A- 2 420 156**
**US-A- 4 361 073**

(73) Patentinhaber : **SIEMENS**
**AKTIENGESELLSCHAFT**
**Wittelsbacherplatz 2**
**D-80333 München (DE)**

(72) Erfinder : **Prost, Werner, Dipl.-Ing.**
**Isarstrasse 28**
**D-8400 Regensburg (DE)**

**Beschreibung**

Die Erfindung betrifft eine Schaltungsanordnung nach dem Oberbegriff von Anspruch 1. Solche Stellglieder werden als hydraulische Linearantriebe oder Drehantriebe für vielseitige Anwendungen, z.B. auch in der Kraftfahrzeugtechnik, eingesetzt.

Um die Haftreibung des Steuerventilkolbens eines solchen Stellgliedes und die Hysterese der Elektromagnete für den Antrieb dieses Kolbens auszuschalten, ist es üblich, dem Ventilsteuerkolben eine Dither- oder Zitterbewegung, d.h. eine dauernde kleinhubige Pendelbewegung, aufzuprägen. Bei einem bekannten fluidischen - insbesondere pneumatischen - Stellantrieb wird der Steuerventilkolben mit einem modulierten Signal gesteuert, dessen Trägerschwingung die Ditherbewegung bewirkt (US-A 4 361 073). Die Trägerfrequenz dieses Signals liegt dabei unter der Resonanzfrequenz, und zwar zwischen dem sog. Primärband - d.h. dem Frequenzband des Steuersignals - und der Resonanzfrequenz des Systems Stellantrieb plus Last. Probleme der Verlustleistung werden dabei nicht angesprochen.

Von ventilgesteuerten Stellantrieben oder Aktoren wird gefordert, daß sie sich linear verhalten. Dazu werden sie so konstruiert, daß die Steuerkanten des Ventilkolbens mit den Steuerkanten des Ventilgehäuses theoretisch keine Überdeckung aufweisen (vgl. auch die Beschreibung des Ausführungsbeispieles). Dabei können sich durch Fertigungstoleranzen aber auch negative Überdeckungen ergeben. Diese haben zur Folge, daß ein Teil der unter Druck stehenden Hydraulikflüssigkeit von der Druckseite des Stellantriebs zu einem Vorratsbehälter abfließt, ohne Nutzarbeit zu verrichten, und dadurch die Verlustleistung erhöht. Bei der ständigen Ditherbewegung des Steuerventils ergibt sich ein entsprechender Hydraulikflüssigkeits-Rückfluß, der von der Größe der Überdeckung und der Amplitude und Frequenz der Pendelschwingung des Steuerventilkolbens abhängt. Je höher dabei die Frequenz und die Amplitude sind, desto höher ist der Rückstrom und damit die Verlustleistung.

Die Größe der Verlustleistung wirkt sich auf die Häufigkeit aus, mit der der Hydraulikflüssigkeit-Druckbehälter geladen werden muß.

Auf diese Häufigkeit wirken sich andererseits auch die durchgeführten Stellbewegungen, d.h. die Höhe der Nutzleistung aus. Die Höhe der Hydraulikflüssigkeits-Verluste kann aus Parametern des Stellantriebs und aus Meßwerten ermittelt werden, wie noch zu erläutern sein wird.

Der Erfindung liegt die Aufgabe zugrunde, eine Stellantriebs-Regelung zu schaffen, die eine gute Dynamik und eine geringe Verlustleistung aufweist.

Erfindungsgemäß wird diese Aufgabe durch eine Schaltungsanordnung mit den Merkmalen des Anspruchs 1 gelöst. Grundgedanke ist dabei, daß die Dither-Bewegung adaptiert wird. Die Amplitude der Pendelschwingung des Steuerventilkolbens wird durch die Adaption an die - konstruktiv positiv ausgelegte - Ventilüberdeckung angepaßt. Damit wird es möglich, die Dynamik des Stellgliedes zu verbessern, den Verluststrom aber innerhalb vorgegebener Grenzen zu halten.

Zweckmäßige und vorteilhafte Weiterbildungen der Erfindung sind den Unteransprüchen zu entnehmen.

Ein Ausführungsbeispiel der Erfindung wird im folgenden anhand der Zeichnung erläutert. Es zeigen:

Figur 1    eine erfindungsgemäße Schaltungsanordnung in Blockdiagrammdarstellung,
Figur 2    ein Steuerventil der Schaltungsanordnung nach Figur 1, in einer Teilansicht,
Figur 3    einen Ausschnitt aus dem Steuerventil nach Figur 2,
Figur 4    den Flüssigkeitsstrom durch das Steuerventil nach Figur 2 und 3 in Abhängigkeit von der Bewegung des Steuerventilkolbens,
Figur 5    die Dither-Bewegung des Steuerventilkolbens nach Figur 2 in Abhängigkeit von der Zeit und
Figur 6    die Abhängigkeit des Flüssigkeitsstroms von einem für die Ditheramplitude charakteristischen elektrischen Strom bei stillstehendem Kolben des Stellantriebs.

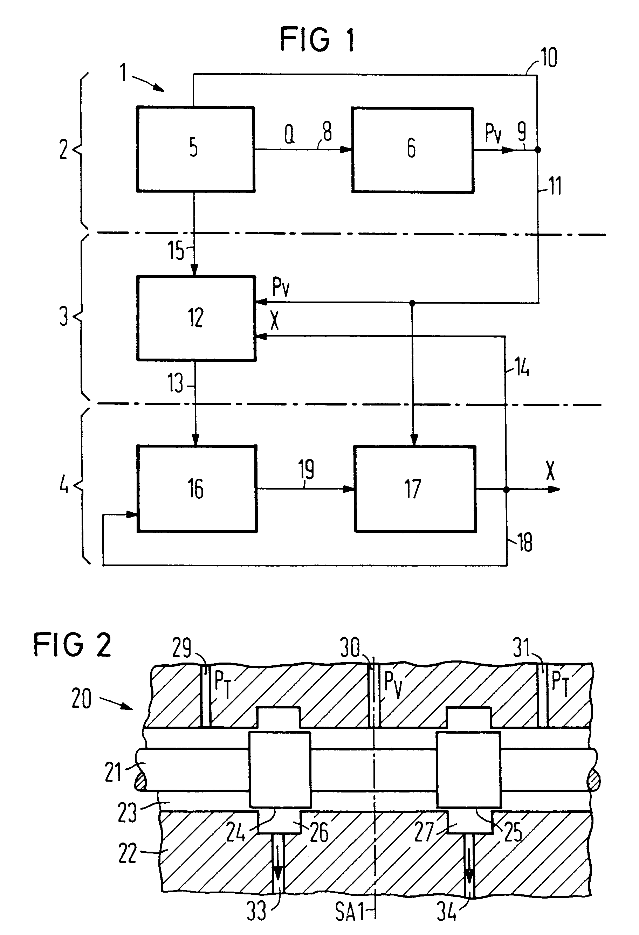

Eine Schaltungsanordnung 1 zum Regeln der Lage oder Position eines Stellantriebs weist einen Druckregelkreis 2, einen Adaptionskreis 3 und einen Lageregelkreis 4 auf (Figur 1). Die in diesem Blockschaltbild dargestellten Leitungen sind Signalleitungen, über die die Informationen bezüglich der verschiedenen physikalischen Größen fließen, oder physikalische Leitungen, über die z.B. Hyraulikflüssigkeit fließt.

Der Druckregelkreis 2 enthält eine Speicherladevorrichtung 5, z.B. in Form einer Druckpumpe, und einen Druckspeicher 6 für die Hyraulikflüssigkeit. Über eine Leitung 8 gelangt ein unter Druck stehender Hyraulik-Flüssigkeitsstrom Q von der Speicherladevorrichtung 5 zu dem Druckspeicher 6.

Der an dem Ausgang des Druckspeichers abgegebene Versorgungsdruck $P_V$ wird als Information über Leitungen 9, 10 zu der Speicherladevorrichtung 5 rückgeführt und außerdem über eine Leitung 11 einem Eingang einer Adaptionsschaltung 12 zugeführt. Zu einem anderen Eingang der Adaptionsschaltung 12 gelangt über eine Leitung 14 die Information über die Stellgröße x, die am Ausgang des Lageregelkreises 4 ansteht. Zu einem dritten Eingang der Adaptionsschaltung 12 wird schließlich über eine Leitung 15 eine Information darüber zugeführt, ob die Speicherladevorrichtung 5 aktiv oder inaktiv ist. Von dem Ausgang der Adaptionsschaltung

2

EP 0 461 288 B1

12 gelangt ein adaptiertes Dithersignal über eine Leitung 13 als Führungsgröße zu einem Eingang des Lageregelkreises 4.

Der Lageregelkreis 4 enthält einen Regler 16 und einen hydaulisch betätigten Stellantrieb 17, auch als Aktuator oder Aktor bezeichnet, der hier die zu regelnde Strecke darstellt. Eine Information über die Position oder Lage x des Stellantriebs 17 gelangt einerseits über die Leitung 14 zu dem Eingang der Adaptionsschaltung 12 und andererseits über eine Leitung 18 zurück zu dem Regler 16. Die Stellinformation gelangt über eine Leitung 19 von dem Regler 16 zu dem Stellglied 17.

Ein Steuerventil 20 (Figur 2) des Stellantriebs 17 weist einen Kolben 21 und ein Gehäuse 22 auf. Der Kolben 21 ist in einem zylindrischen Hohlraum 23 des Gehäuses 22 axial verschiebbar, und zwar durch elektromagnetische Proportionalventile, die in der Zeichnung nicht dargestellt sind, angeordnet.

Der Ventilkolben 21 weist zylindrische Steuerflächen 24, 25 größeren Durchmessers auf, die mit Ringnuten 26, 27 in der Wand des zylindrischen Hohlraums 23 zusammenwirken.

Die Steuerflächen 24 und 25 unterteilen den Hohlraum 23 in mehrere Kammern. In die linke Kammer mündet eine Bohrung 29, die mit dem Vorratsbehälter oder Tank für die Hyraulikflüssigkeit verbunden ist, und in der der - niedrige - Tankdruck $P_T$ herrscht. Eine in die mittlere Kammer mündende Bohrung 30 ist mit dem Druckspeicher 6 verbunden, sie steht unter dem Versorgungsdruck $P_V$. Eine in die rechte Kammer mündende Bohrung 31 ist wiederum mit dem - hier nicht dargestellten - Tank verbunden und steht unter dem Tankdruck $P_T$.

Von den Ringnuten 26 und 27 gehen Bohrungen 33 bzw. 34 aus, die zu den beiden Kammern des - hier nicht dargestellten - Stellgliedes führen. Der in ihnen herrschende Druck hängt von der Stellung des Steuerventil-Kolbens 21 ab.

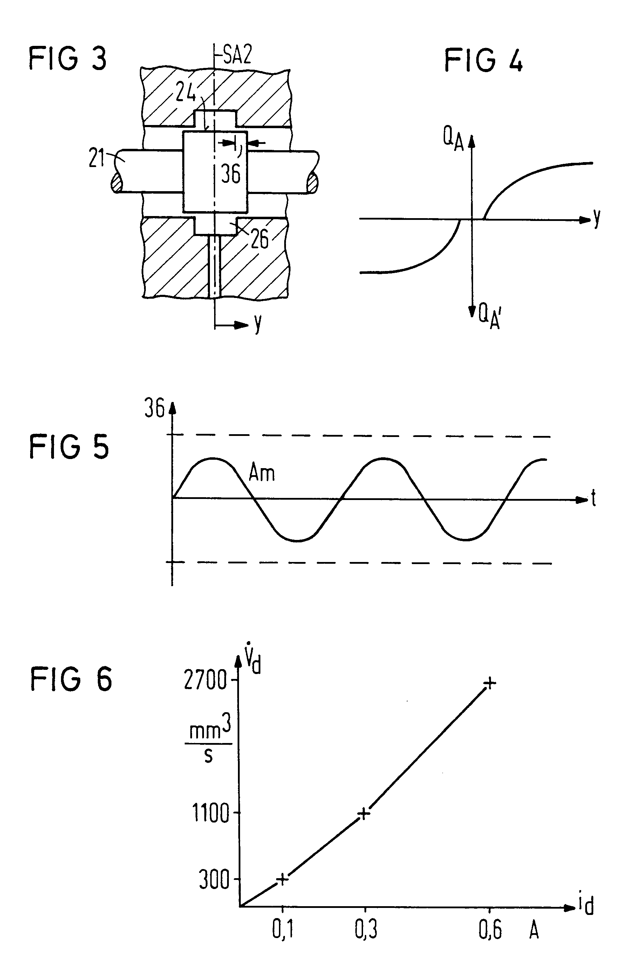

Ist die Steuerfläche 24 des Kolbens 21 breiter als die von ihr abgedeckte Nut 26, so liegt eine positive Ventilüberdeckung 36 (Figur 3) vor. Die Ventilüberdeckung 36 stellt sich als den Abstand zwischen der (in der Zeichnung) rechten Kante der Nut 26 und der ebenfalls rechten Kante der Steuerfläche 24, sowie aus dem Abstand zwischen den beiden entsprechenden linken Kanten dar.

Eine kleine Verlustleistung des Stellantriebs läßt sich mit einer positiven Ventilüberdeckung 36 erreichen. Es fließt solange keine Hydraulikflüssigkeit über die jeweilige Steuerkante, wie die Lage des Steuerventil-Kolbens 21 innerhalb der Überdeckungsbreite des Steuerventils 20 liegt. In Figur 4 ist die Abhängigkeit des Flüssigkeitsstroms von der Bewegung y des Kolbens 21 dargestellt: $Q_A$ bei Bewegung des Kolbens 21 nach rechts $Q_{A'}$ bei Bewegung des Kolbens 21 nach links.

Die Ventilüberdeckung 36 ist so groß zu wählen, daß die Amplitude $A_m$ der Dither-Bewegung oder Pendelschwingung des Kolbens 21, die zum Überwinden der Haftreibung und der Hysterese notwendig ist, keineswegs größer ist als die gesamte Ventilüberdeckung 36. Wegen der unvermeindlichen Fertigungstoleranzen muß allerdings die Ventilüberdeckung so groß sein, daß die Amplitude der Dither-oder Pendelschwingung des Kolbens 21 um die Toleranzbreite kleiner ist als die tatsächliche Ventilüberdeckung (dies ist in Figur 5 verdeutlicht, in der die tatsächliche Ventilüberdeckung 36 durch eine obere und eine untere gestrichelte Linie dargestellt ist). Durch eine solche größere Ventilüberdeckung wird aber die Dynamik des Steuerventils, d.h. die schnelle und lineare Reaktion des Stellantriebs auf Stellsignale, beeinträchtigt.

Die hier beschriebene Schaltungsanordnung vermeidet diese Beeinträchtigung durch eine Adaption der Ditherwirkung. Die Amplitude $A_m$ der Ditherbewegung des Kolbens 21 wird durch eine adaptive Optimierung auf den Wert der tatsächlichen Ventilüberdeckung 36 angehoben oder angepaßt. Dadurch wird die Dynamik des Stellantriebs verbessert, der Flüssigkeits-Verluststrom bleibt aber begrenzt.

Die Adaption wird folgendermaßen durchgeführt: Es wird laufend der von dem Druckspeicher kommende tatsächliche Flüssigkeitsstrom $\dot{V}_{ist}$ mit dem nominalen Flüssigkeitsstrom $\dot{V}_n$ der sich bei einem idealen Stellantrieb, d.h. ohne Ditherwirkung, einstellen würde, verglichen. Die Differenz aus den beiden Strömen $\dot{V}_{ist}$ und $\dot{V}_n$ wird als der durch die Dither-Bewegung verursachte Flüssigkeitsstrom $\dot{V}_d$ betrachtet.

Zwischen dem Zeitpunkt des Aus- und des Einschaltens der Speicherladevorrichtung 5 kann ein Differenzdruck $\Delta P$ entweder aus den Schaltpunkten eines Zweipunktschalters oder aus einer Druckmessung bestimmt werden. Für je einen Speicherladevorgang können die vorliegenden charakteristischen Größen errechnet werden. Die dabei abgegebenen Hydraulik-Flüssigkeitsmenge ergibt sich näherungsweise aus

$$V_{ist} = \Delta P : (P_m{}^{K_1} \cdot K_2)$$

worin

$K_1$ $\quad = (ka + 1) : ka$
$K_2$ $\quad = ka : (V_S \cdot P_{VS}{}^{1/ka})$
ka $\quad$ : Adiabatenexponent
$P_{VS}$ $\quad$ : Vorspanndruck des Speichers
$V_S$ $\quad$ : Speichervolumen
$P_m$ $\quad$ : gemittelter Arbeitsdruck

3

sind.

Der für die Kolbenbewegungen des Stellantriebs erforderliche Flüssigkeitsstrom, der sogenannte natürliche Verbrauch, ergibt sich aus:

$$V_n = \int_{t\ aus}^{t\ ein} A_{St} \cdot |\dot{x}_{St}| \cdot dt$$

worin

$A_{St}$ : Stellkolbenfläche
$\dot{x}_{St}$ : Stellkolbengeschwindigkeit

sind.

Aus den Flüssigkeitsmengen $V_{ist}$ und $V_n$ kann eine Ölmenge $V_d$ ermittelt werden, die für die Dither-Bewegung verbraucht wird:

$$V_d = V_{ist} - V_n$$

Die Abhängigkeit des durch die Dither-Bewegung verbrauchten Flüssigkeitsstromes $\dot{V}_d$ von der einem elektrischen Differenzstrom $i_d$ durch die beiden den Kolben 21 antreibenden Proportionalmagnete, der für die Kraft auf den Kolben 21 maßgeblich ist, ist für ein Beispiel einer erfindungsgemäßen Schaltungsanordnung aus dem Diagramm von Figur 6 ersichtlich. Dieser Zusammenhang gilt jedoch nur in Bereichen, in denen sich die Stellkolbengeschwindigkeit $\dot{x}_{St}$ um Null herum bewegt. Bei stärker ausgelenktem Steuerventil-Kolben 21 verbraucht die Dither-Bewegung keinen zusätzlichen Flüssigkeitsstrom. Zur Berechnung dieses Flüssigkeitsstromes $\dot{V}_d$ darf also nicht die Zeitdifferenz $Dt = t_1 - t_{aus}$ verwendet werden, $Dt$ muß vielmehr gewichtet werden $(Dt_g)$.

Der Flüssigkeitsstrom $\dot{V}_d$ für die Dither-Bewegung ergibt sich dann aus

$$\dot{V}_d = V_d/Dt_g \quad (4)$$

Der so ermittelte von der Dither-Bewegung abhängige Flüssigkeitsstrom wird dann als Führungsgröße für den Lageregelkreis 4 verwendet.

Die Adaption der Dither-Bewegung ist anhand eines symmetrischen Steuerventil-Kolbens 21 beschrieben worden. Sie kann aber auch für Steuerventil-Kolben durchgeführt werden, die zu der Symmetrieachse SA1 (Figur 2) oder zu der Symmetrieachse SA2 (Figur 3) unsymmetrisch ausgebildet sind.

Die Adaptionsschaltung 12 kann als digitale programmgesteuerte Rechnereinheit, z.B. als Mikroprozessor, ausgebildet sein. Einige Bestandteile der Schaltungsanordnung 1, in denen Informationen verarbeitet werden (z.B. die Leitungen 13 und 15, der Regler 16), können dabei in der Adaptionsschaltung 12 integriert sein.

## Patentansprüche

1. Schaltungsanordnung zum Regeln eines hydraulischen Stellantriebes (17), dessen Lage von einem elektromagnetisch betätigten Steuerventil (20) gesteuert wird, welches einen den Flüssigkeitsstrom zu dem Stellantrieb bestimmenden Kolben (21) aufweist, dem zur Vermeidung von Reibungseinflüssen eine Ditherbewegung aufgeprägt wird,
   **dadurch gekennzeichnet,**
   daß der Kolben (21) eine positive Ventilüberdeckung (36) aufweist und daß eine Adaptionsschaltung (12) vorgesehen ist, durch welche die Amplitude (Am) der Ditherbewegung adaptiv an die Ventilüberdeckung angepaßt wird.

2. Schaltungsanordnung nach Anspruch 1,
   **dadurch gekennzeichnet,**
   daß durch die Adaptionsschaltung (12)
   - der in dem Speicher (6) für die Hydraulikflüssigkeit herrschende Druck erfaßt und daraus der Flüssigkeitsstrom ermittelt wird, der durch die Dither-Bewegung verursacht wird,
   - anhand dieses Flüssigkeitsstromes jeweils ein adaptiertes Dithersignal erzeugt wird, daß dem Lageregler (16) des Stellantriebs (17) als Führungsgröße zugeführt wird.

3. Schaltungsanordnung nach Anspruch 1,
   **dadurch gekennzeichnet,**

daß die Adaptionsschaltung (12) ein Koppelglied zwischen dem Regelkreis (2) für den Hydraulikflüssigkeit-Druckspeicher (6) und dem Regelkreis (4) für den hydraulischen Stellantrieb (17) bildet.

4.  Schaltungsanordnung nach Anspruch 1,
    **dadurch gekennzeichnet,**
    daß durch die Adaptionsschaltung (12) der von dem Druckspeicher (6) gelieferte tatsächliche Flüssigkeitsstrom mit dem ohne Dither-Bewegung zu liefernden nominalen Flüssigkeitsstrom verglichen und daraus der von der Dither-Bewegung verursachte Flüssigkeitsstrom ermittelt wird.

5.  Schaltungsanordnung nach Anspruch 1,
    **dadurch gekennzeichnet,**
    daß die Adaptionsschaltung (12) als digitale Rechnereinheit ausgebildet ist.

6.  Schaltungsanordnung nach Anspruch 1,
    **dadurch gekennzeichnet,**
    daß die Amplitude der Dither-Bewegung durch die Adaptionsschaltung (12) auf das Maß der Ventilüberdeckung (36) des Kolbens (21) des Steuerventils (20) angehoben wird.

## Claims

1.  Circuit arrangement for regulating a hydraulic actuator (17), the position of which is controlled by an electromagnetically operated control valve (20) which has a piston (21) determining the fluid flow rate to the actuator, on which a dither motion is impressed in order to avoid the influences of friction, characterized in that the piston (21) has a positive valve overlap (36), and in that an adaption circuit (12) is provided, by means of which the amplitude (Am) of the dither motion is adaptively matched to the valve overlap.

2.  Circuit arrangement according to Claim 1, characterized in that, by means of the adaption circuit (12),
    - the pressure prevailing in the accumulator (6) for the hydraulic fluid is detected and the fluid flow rate which is caused by the dither motion is calculated therefrom,
    - depending on this fluid flow rate, an adapted dither signal is in each case produced and fed to the position regulator (16) of the actuator (17) as a reference input variable.

3.  Circuit arrangement according to Claim 1, characterized in that the adaption circuit (12) forms a coupling element between the regulator circuit (2) for the hydraulic-fluid accumulator (6) and the regulator circuit (4) for the hydraulic actuator (17).

4.  Circuit arrangement according to Claim 1, characterized in that, by means of the adaption circuit (12), the actual fluid flow rate delivered by the accumulator (6) is compared with the nominal fluid flow rate to be delivered without dither motion and the fluid flow rate caused by the dither motion is calculated therefrom.

5.  Circuit arrangement according to Claim 1, characterized in that the adaption circuit (12) is designed as a digital computer unit.

6.  Circuit arrangement according to Claim 1, characterized in that the amplitude of the dither motion is raised by the adaption circuit (12) to the extent of the valve overlap (36) of the piston (21) of the control valve (20).

## Revendications

1.  Montage pour régler un vérin hydraulique (17), dont la position est commandée par une soupape de commande (20) actionnée par voie électromagnétique et qui possède un piston (21), qui détermine le débit de liquide envoyé au vérin, et auquel est imprimé un déplacement de tremblottement pour éviter des influences dues au frottement, caractérisé par le fait que le piston (21) présente un chevauchement de soupape positif (36) et qu'il est prévu un circuit adaptateur (12), grâce auquel l'amplitude (Am) du déplacement de tremblottement est réglée de façon adaptative sur le chevauchement de soupape.

2.  Montage suivant la revendication 1, caractérisé par le fait que grâce au circuit adapteur (12),

- la pression, qui règne dans l'accumulateur (6) pour le liquide hydraulique, est détectée et le débit du liquide, qui est provoqué par le déplacement de tremblottement, est déterminé à partir de cette pression, et
- respectivement un signal de tremblottement adapté est produit sur la base de ce débit de liquide, signal qui est envoyé en tant que grandeur pilote au régulateur de position (16) du vérin (17).

3. Montage suivant la revendication 1, caractérisé par le fait que le circuit adaptateur (12) forme un organe de couplage entre le circuit de régulation (2) pour l'accumulateur de pression du liquide hydraulique (6) et le circuit de régulation (4) pour le vérin hydraulique (17).

4. Montage suivant la revendication 1, caractérisé par le fait que grâce au circuit adaptateur (12), le débit effectif de liquide, qui est délivré par l'accumulateur de pression (6), est comparé au débit nominal de liquide, qui doit être délivré sans le déplacement de tremblottement, et que le débit de liquide, qui est provoqué par le déplacement de tremblottement, est déterminé à partir de ce débit.

5. Montage suivant la revendication 1, caractérisé par le fait que le circuit adaptateur (12) est agencé sous la forme d'une unité de calcul numérique.

6. Montage suivant la revendication 1, caractérisé par le fait que l'amplitude du déplacement de tremblottement est accrue, par le circuit adaptateur (12), à la valeur du chevauchement de soupape (36) du piston (21) de la soupape de commande (20).

## FIG 1

## FIG 2

FIG 3

FIG 4

FIG 5

FIG 6